# EUROPEAN PATENT APPLICATION

(11) **EP 4 641 772 A1**
(43) Date of publication of application: **29.10.2025**
(21) Application number: 24861481.0
(22) Date of filing: 01.04.2024
(51) Int. Cl.: H01M 50/10, H01M 50/244, H01M 50/291

(54) **BOX, BATTERY AND ELECTRIC DEVICE**

(30) Priority: 08.09.2023 CN 202311163622
(71) Applicant: Contemporary Amperex Technology Co., Limited, Ningde, Fujian 352100 (CN)
(72) Inventor: WU, Kai, Ningde, Fujian 352100 (CN); WANG, Liangyi, Ningde, Fujian 352100 (CN); WANG, Yalei, Ningde, Fujian 352100 (CN); QIN, Feng, Ningde, Fujian 352100 (CN); WANG, Zhi, Ningde, Fujian 352100 (CN)
(74) Representative: Gong, Jinping
(86) International application number: PCT/CN2024/085372
(87) International publication number: WO 2025/050630

(57) **Abstract**

This application provides a box (10), a battery (100), and an electric device. The box (10) includes a bottom plate (110) and a mounting beam (120), where the bottom plate (110) includes an outer wall surface (111), the mounting beam (120) includes a connecting portion (121), the connecting portion (121) is configured to be connected to the bottom plate (110), and at least a portion of the connecting portion (121) is in contact with the outer wall surface (111). In the box (10) provided in the embodiments of this application, the mounting beam (120) is connected to the bottom plate (110) through the connecting portion (121) to increase a contact area with the bottom plate (110). Therefore, a larger contact area between the bottom plate (110) and the connecting portion (121) can disperse stress between the bottom plate (110) and the mounting beam (120), meaning that a risk of fracture between the bottom plate (110) and the connecting portion (121) is lower, and the box (10) is more reliable when mounted on a main body of the electric device through the mounting beam (120) for use.

## Description

This application refers to China Patent Application No. 202311163622.1, filed on September 8, 2023, entitled "BOX, BATTERY, AND ELECTRIC DEVICE", which is fully incorporated into this application by reference.

### TECHNICAL FIELD

This application relates to the field of battery structure technologies, and particularly, provides a box, a battery, and an electric device.

### BACKGROUND

When a battery is mounted for use, a beam structure provided on a box of the battery is connected to a main body of an electric device to fix the battery to the main body of the electric device, such as a vehicle, an aircraft, or a ship. However, during operation, the electric device may experience vibrations, which may in turn cause the battery to vibrate relative to the main body to a certain extent. Consequently, significant stress is generated between the beam structure of the box and a bottom plate of the box, resulting in a high risk of fracture between the beam structure and the bottom plate.

### SUMMARY

An objective of embodiments of this application is to provide a box, a battery, and an electric device, aiming to address the issue in the related art that during mounting and use of a box, significant stress may be generated between a beam structure and a bottom plate and the beam structure and the bottom plate are prone to fracture.

To achieve the foregoing objective, technical solutions adopted in the embodiments of this application are as follows:

According to a first aspect, an embodiment of this application provides a box, where the box is configured to be disposed on a main body of an electric device, the box includes a bottom plate and a mounting beam, the bottom plate includes an outer wall surface, the mounting beam is configured to connect to the main body, the mounting beam includes a connecting portion, the connecting portion is configured to be connected to the bottom plate, and at least a portion of the connecting portion is in contact with the outer wall surface.

Beneficial effects of embodiments of this application: The box provided in the embodiments of this application can be connected to the main body of the electric device via the mounting beam, where the mounting beam is connected to and in contact with the bottom plate through the connecting portion. The mounting beam can increase a contact area with the bottom plate by providing the connecting portion. Therefore, a larger contact area between the bottom plate and the connecting portion can disperse stress between the bottom plate and the mounting beam, meaning that a risk of fracture between the bottom plate and the connecting portion is lower, and the box is more reliable when mounted on the main body of the electric device through the mounting beam for use.

In some embodiments, the mounting beam further includes a beam body, where the beam body is configured to connect to the main body, and the connecting portion is disposed on the beam body.

By adopting the foregoing technical solution, when the box is mounted on the main body using the mounting beam, the beam body of the mounting beam can be connected to the main body, and the connecting portion of the mounting beam is disposed on the beam body and is connected to and in contact with the outer wall surface of the bottom plate to disperse stress. This can reduce a probability of fracture between the mounting beam and the bottom plate when the box is mounted on the main body.

In some embodiments, the connecting portion extends outward from the beam body and beyond the beam body.

By adopting the foregoing technical solution, the connecting portion can extend outward and beyond the beam body, meaning that the connecting portion has a larger contact area with the outer wall surface of the bottom plate. The connecting portion has a better effect of dispersing the force acting on the bottom plate. As a result, the risk of fracture between the mounting beam and the bottom plate is lower, and the box is more stable when mounted on the main body.

In some embodiments, the beam body is spaced apart from the outer wall surface.

By adopting the foregoing technical solution, when the connecting portion of the mounting beam is connected to the bottom plate and in contact with the outer wall surface of the bottom plate, the beam body of the mounting beam is spaced apart from the outer wall surface of the bottom plate. Therefore, the beam body can provide an avoidance effect for the outer wall surface of the bottom plate, and the risk of interference between the beam body and the structures on the outer wall surface of the bottom plate can be reduced.

In some embodiments, the beam body is provided with amounting structure, the beam body is configured to be connected to the main body through the mounting structure, and along a thickness direction of the bottom plate, a projection of the mounting structure is located within a projection of the connecting portion.

By adopting the foregoing technical solution, when the beam body of the mounting beam is connected to the main body through the mounting structure, the main body may vibrate, causing the box to vibrate relative to the main body. As a result, the overall weight of the box exerts a significant force on the mounting structure and the main body. Moreover, a certain degree of vibration also occurs between the connecting portion of the mounting beam and the bottom plate, generating a significant force. By configuring the projection of the mounting structure along the thickness direction of the bottom plate to be located within the connecting portion, the force between the main body and the mounting structure and the force between the connecting portion and the bottom plate are substantially coincident in position in the thickness direction of the bottom plate. In this way, it can effectively prevent the force between the main body and the mounting structure and the force between the connecting portion and the bottom plate forming a lever effect on the mounting beam, reducing the damage to the mounting beam as well as to the main body and bottom plate connected to the mounting beam, lowering the risk of fracture between the mounting beam and the bottom plate, and making the box more stable when mounted on the main body.

In some embodiments, the beam body abuts against the outer wall surface.

By adopting the foregoing technical solution, based on the fact that the connecting portion of the mounting beam can be connected to and at least partially in contact with the outer wall surface of the bottom plate, the beam body can also abut against the outer wall surface. In this way, a contact area between the mounting beam and the bottom plate can be effectively increased, meaning that the mounting beam can disperse the force with the bottom plate through both the beam body and the connecting portion, further reducing the risk of fracture between the mounting beam and the bottom plate.

In some embodiments, an entirety of the connecting portion is configured to be symmetrically arranged with respect to a central axis of the beam body.

By adopting the foregoing technical solution, the force transmitted from the main body to the beam body is more evenly distributed to the region between the connecting portion and the bottom plate. As a result, the connecting portion has a better effect of dispersing the force acting on the bottom plate, and the risk of fracture between the mounting beam and the bottom plate is lower.

In some embodiments, the bottom plate is provided with the beam body along a central axis thereof.

By adopting the foregoing technical solution, when the main body vibrates, the box also vibrates relative to the main body. Since the mounting beam is connected to the main body, it can be equivalent to other parts of the box vibrating relative to the mounting beam. The beam body of the mounting beam is disposed along the central axis of the bottom plate, meaning that the mounting beam positions at a vibration amplitude center of the bottom plate, allowing the connecting portion of the mounting beam to experience more uniform force from the bottom plate, thereby reducing the risk of fracture of the mounting beam to some extent.

In some embodiments, the connecting portion is provided in plurality, and the plurality of connecting portions are spaced apart from each other.

By adopting the foregoing technical solution, a plurality of spaced-apart connecting portions can be used to connect to and in contact with the bottom plate, and the force acting on the bottom plate can be dispersed through the plurality of connecting portions, which can effectively reduce the risk of fracture between the connecting portions and the bottom plate.

In some embodiments, the mounting beam further includes a beam body, where a portion of the beam body facing the outer wall surface forms the connecting portion, a portion of the beam body facing away from the outer wall surface forms a mounting portion, the mounting portion is configured to connect to the main body, and along the thickness direction of the bottom plate, a projection of the mounting portion is located within a projection of the connecting portion.

By adopting the foregoing technical solution, the projection of the mounting portion is arranged to be located within the projection of the connecting portion along the direction of the bottom plate, meaning that an area of the connecting portion is controlled to be larger than an area of the mounting portion. The connecting portion with a larger area is used to connect to and in contact with the bottom plate, which can disperse the force exerted by the bottom plate on the connecting portion, thereby effectively reducing the risk of fracture between the connecting portion and the bottom plate.

In some embodiments, the bottom plate is provided with a flow channel, where the flow channel accommodates a heat exchange medium, and along the thickness direction of the bottom plate, a projection of the flow channel is separated from a projection of the connecting portion.

By adopting the foregoing technical solution, the flow channel and the connecting portion are separated along the thickness direction of the bottom plate, which reduces an impact of the connecting portion on the flow channel.

According to a second aspect, an embodiment of this application further provides a battery, including a battery cell and the box as described above, where the battery cell is located within the box.

Beneficial effects of embodiments of this application: The battery provided in this embodiment of this application includes the box as described above. With a lower risk of fracture between the mounting beam and the bottom plate of the box, an overall structure of the battery is more robust.

According to a third aspect, an embodiment of this application further provides an electric device, including a main body and the battery as described above, where the box of the battery is disposed on the main body, and the battery is configured to provide electrical energy.

Beneficial effects of embodiments of this application: The electric device provided in this embodiment of this application includes the battery as described above. With a more robust overall structure of the battery, a process of the battery being disposed on the main body and providing electrical energy to the main body is more stable, and a risk of the battery detaching from the main body is lower.

### BRIEF DESCRIPTION OF DRAWINGS

To describe the technical solutions in the embodiments of this application more clearly, the following briefly describes the accompanying drawings required for describing the embodiments or the related art. Apparently, the accompanying drawings in the following description show merely some embodiments of this application, and persons of ordinary skill in the art may derive other drawings from these accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic structural diagram of a portion of a box including a bottom plate according to some embodiments of this application;
FIG. 4 is a schematic diagram of a connection structure between a bottom plate and a mounting beam according to some embodiments of this application;
FIG. 5 is a schematic structural diagram of a mounting beam according to some embodiments of this application;
FIG. 6 is a schematic structural diagram of another bottom plate according to some embodiments of this application;
FIG. 7 is a schematic structural diagram of another mounting beam according to some embodiments of this application;
FIG. 8 is a schematic structural diagram of another mounting beam according to some embodiments of this application;
FIG. 9 is a schematic structural diagram of another mounting beam according to some embodiments of this application; and
FIG. 10 is a schematic structural diagram of another mounting beam according to some embodiments of this application.

In the drawings, reference signs are as follows:
1000: vehicle;
100: battery; 200: controller; 300: motor;
10: box; 11: first portion; 12: second portion; 20: battery cell;
110: bottom plate; 111: outer wall surface; 1101: flow channel;
120: mounting beam; 121: connecting portion; 122: beam body; 1221: mounting structure;
L: length direction; and N: thickness direction.

### DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the drawings are exemplary and aim to explain this application, but cannot be understood as a limitation of this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as a limitation to this application.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of this application, "a plurality of" means two or more than two unless otherwise specifically stated.

In the description of this application, unless otherwise specified and defined explicitly, the terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

When a battery is mounted for use, a beam structure provided on a box of the battery is connected to a main body of an electric device to fix the battery to the main body of the electric device, such as a vehicle, an aircraft, or a ship, and to provide electrical energy to the main body. However, during operation, the electric device may experience vibrations, such as bumps in a vehicle during operation, which causes vibrations of a certain amplitude between the connected main body and the battery. To be specific, stress is generated between the main body and the beam structure provided on the box of the battery, and since the beam structure is connected to a bottom plate of the box, vibrations of a certain amplitude and significant stress are also generated between the beam structure and the bottom plate. Due to a relatively high structural strength of the beam structure, the beam structure can withstand stress generated with the main body, and a probability of fracture of the beam structure is low. However, stress generated between the beam structure and the bottom plate is likely to cause fracture between the beam structure and the bottom plate or lead to risks of deformation, cracking, or other damage to the bottom plate.

Based on the foregoing considerations, to address the issue in the related art that during mounting and use of a box, significant stress may be generated between a beam structure and a bottom plate, and the beam structure and the bottom plate are prone to fracture, a box was designed. The box is connected to the bottom plate using a connecting portion of a mounting beam, and at least a portion of the connecting portion is in contact with an outer wall surface of the bottom plate. The connecting portion is used to increase a contact area with the bottom plate, so as to disperse the stress between the mounting beam and the bottom plate, effectively reducing a probability of risks such as fracture, damage, or deformation between the mounting beam and the bottom plate.

In such a box, the connecting portion is used to connect to the bottom plate, and the connecting portion is in contact with the outer wall surface of the bottom plate. During mounting and use of the box, when the main body of the electric device vibrates, the bottom plate also vibrates to a certain extent relative to the mounting beam, resulting in stress between the bottom plate and the mounting beam. The connection method in which the connecting portion is in contact with the outer wall surface of the bottom plate can disperse the stress between the bottom plate and the mounting beam, so as to reduce an impact of stress concentration and lower a risk of damages such as deformation, fracture, or breakage between the mounting beam and the bottom plate due to stress concentration. This can make a structure of the box more robust during use, thereby improving a service life of the box.

The box disclosed in the embodiments of this application can be used for electric devices that use a battery as a power source or various energy storage systems that use a battery as an energy storage element. The electric device may include but is not limited to a mobile phone, a tablet, a laptop, an electric toy, an electric tool, an electric scooter, an electric vehicle, a ship, a spacecraft, or the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

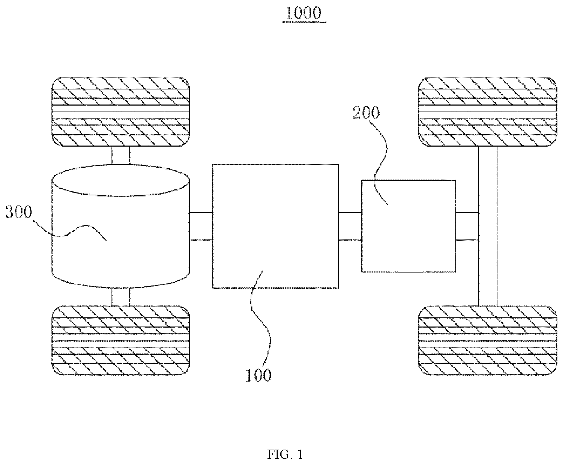

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

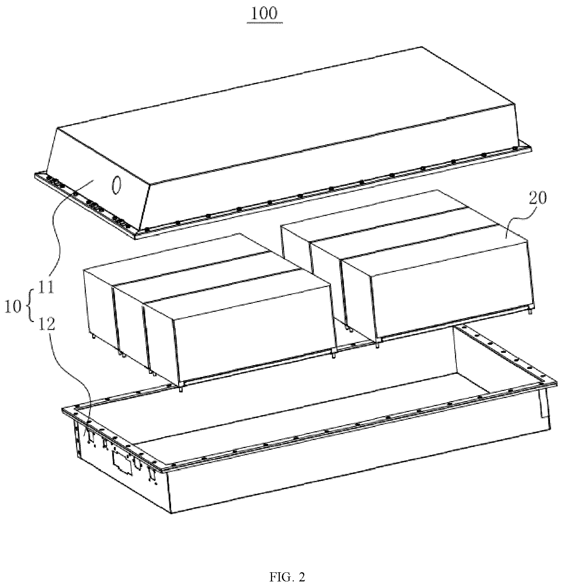

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 are engaged with each other so that the first portion 11 and the second portion 12 jointly define an accommodating space for accommodating the battery cell 20. The second portion 12 may be a hollow structure with an opening at one end, the first portion 11 may be a plate-like structure, and the first portion 11 is engaged with the opening side of the second portion 12, so that the first portion 11 and the second portion 12 jointly define the accommodating space; or the first portion 11 and the second portion 12 may both be hollow structures with an opening on one side, and the opening side of the first portion 11 is engaged with the opening side of the second portion 12. Certainly, the box 10 formed by the first portion 11 and the second portion 12 may be in various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or in other shapes.

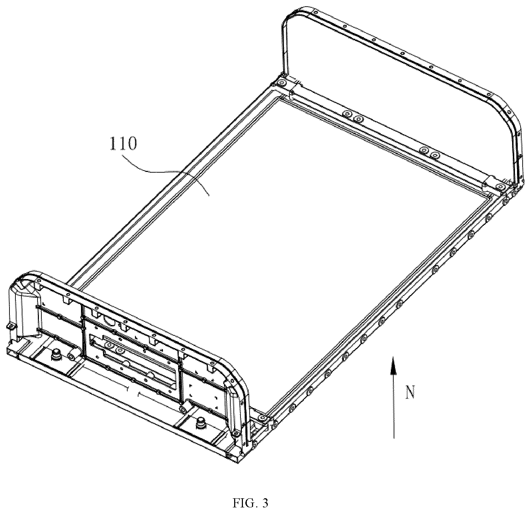

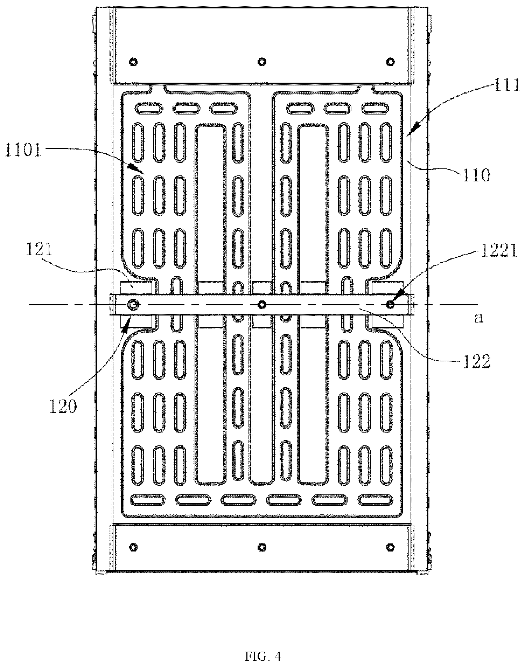

According to some embodiments of this application, referring to FIG. 2 to FIG. 4, an embodiment of this application provides a box 10, where the box 10 is configured to be disposed on a main body of an electric device, the box 10 includes a bottom plate 110 and a mounting beam 120, the bottom plate 110 includes an outer wall surface 111, the mounting beam 120 is configured to connect to the main body, the mounting beam 120 includes a connecting portion 121, the connecting portion 121 is configured to be connected to the bottom plate 110, and at least a portion of the connecting portion 121 is in contact with the outer wall surface 111.

The bottom plate 110 is a base structure of the box 10, and generally, the bottom plate 110 is optionally a plate-like structure. It can be understood that the bottom plate 110 may include, but is not limited to, an aluminum plate, a steel plate, an iron plate, or an alloy plate. The outer wall surface 111 of the bottom plate 110 is a side wall surface of the bottom plate 110 facing outward from the box 10.

The main body of the electric device refers to a primary structure of the electric device. For example, when the electric device is a vehicle 1000, the main body is a body of the vehicle 1000, and the box 10 is connected to the body for assembly and use.

The mounting beam 120 is a beam structure disposed on the bottom plate 110 and configured to connect to the main body, and the mounting beam 120 enables the box 10 to be mounted on the main body for use. The connection between the mounting beam 120 and the main body may be achieved by fixing the mounting beam 120 to a corresponding part of the main body using fasteners such as bolts. The mounting beam 120 may include, but is not limited to, an aluminum beam, a steel beam, or an alloy beam. The mounting beam 120 may be provided in one or plurality. When the mounting beam 120 is provided in one, the mounting beam 120 may be disposed at any position on the outer wall surface 111 of the bottom plate 110 and connected to the bottom plate 110. When the mounting beam 120 is provided in plurality, the plurality of mounting beams 120 may be arranged at intervals along a length direction of the bottom plate 110. For example, in some specific implementations, the mounting beam 120 is provided in one, and the mounting beam 120 is arranged along a central axis a of the bottom plate 110.

The mounting beam 120 includes a connecting portion 121, where the connecting portion 121 is configured to connect to the bottom plate 110 and can be in contact with the outer wall surface 111 of the bottom plate 110. Optionally, the connecting portion 121 may be an external structure disposed on the mounting beam 120, for example, a fin, a flat plate, or a support block, these structures may be disposed on the mounting beam 120 by ways such as welding, bonding, or screwing. In this case, the connecting portion 121 may be provided in one or plurality, or the connecting portion 121 may be a portion formed by a part of the mounting beam 120 for connection to the bottom plate 110. For example, the connecting portion 121 may be a beam side wall of the mounting beam 120 on a side facing the bottom plate 110. In this case, a surface area of the beam side wall may be increased by widening the mounting beam 120, so as to increase an area that the mounting beam 120 is connected to and in contact with the outer wall surface 111 of the bottom plate 110, or only the beam side wall on the aforementioned side may be widened to specifically increase the surface area of that side.

The connecting portion 121 is connected to the bottom plate 110. Optionally, the connection between the connecting portion 121 and the bottom plate 110 may be achieved by ways such as welding, bonding, or screwing. For example, in some specific implementations, the connecting portion 121 may be connected to the bottom plate 110 through spot welding to form an integral structure.

At least a portion of the connecting portion 121 is in contact with the outer wall surface 111. It can be understood that a side wall of the connecting portion 121 facing the outer wall surface 111 may be entirely in contact with the outer wall surface 111, or the connecting portion 121 may have a bent structure or a clearance structure formed, such that a portion of the connecting portion 121 is in contact with the outer wall surface 111.

The box 10 provided in the embodiments of this application can be connected to the main body of the electric device via the mounting beam 120, where the mounting beam 120 is connected to and in contact with the bottom plate 110 through the connecting portion 121. The mounting beam 120 can disperse stress between the bottom plate 110 and the mounting beam 120 by providing the connecting portion 121, meaning that a risk of fracture between the bottom plate 110 and the connecting portion 121 is lower, and the box 10 is more reliable when mounted on the main body of the electric device through the mounting beam 120 for use.

According to some embodiments of this application, referring to FIG. 2 to FIG. 5, the mounting beam 120 further includes a beam body 122, where the beam body 122 is configured to connect to the main body, and the connecting portion 121 is provided on the beam body 122.

It can be understood that the beam body 122 refers to a beam structure portion of the mounting beam 120, and the connecting portion 121 may be disposed on the beam body 122, for example, by being fixedly connected to the beam body 122 through welding, screwing, or bonding, or integrally formed with the beam body 122.

The beam body 122 may be an extruded aluminum structure. The beam body 122 is configured to connect to the main body. Optionally, a connection hole (through hole, threaded hole, or the like) may be formed on the beam body 122, and a fastener such as bolt or screw may be passed through the connection hole to fix the beam body 122 to the main body.

With this configuration, when the box 10 is mounted on the main body using the mounting beam 120, the beam body 122 of the mounting beam 120 can be connected to the main body, and the connecting portion 121 of the mounting beam 120 is disposed on the beam body 122 and is connected to and in contact with the outer wall surface 111 of the bottom plate 110 to disperse forces. This can reduce a probability of fracture between the mounting beam 120 and the bottom plate 110 when the box 10 is mounted on the main body.

According to some embodiments of this application, referring to FIG. 2, FIG. 4 to FIG. 8, the connecting portion 121 extends outward from the beam body 122 and beyond the beam body 122.

It can be understood that the connecting portion 121 extends outward and beyond the beam body 122. The connecting portion 121 may extend outward the beam body 122 in any direction and beyond the beam body 122 and then be connected to the bottom plate 110. This can disperse stress between the bottom plate 110 and the connecting portion 121. The connecting portion 121 may be disposed on one side of the beam body 122 and extend outward from the beam body 122, or the connecting portion 121 may extend outward the beam body 122 from opposite sides of the beam body 122 simultaneously.

For example, in some specific implementations, in a direction parallel to the outer wall surface 111 and perpendicular to a length direction L of the beam body 122, the connecting portion 121 can extend outward from the beam body 122 and beyond the beam body 122, such that the connecting portion 121 have a larger surface area, to be specific, the connecting portion 121 can have a larger contact area with the outer wall surface 111 of the bottom plate 110. As a result, stress between the bottom plate 110 and the mounting beam 120 can be dispersed, and the risk of fracture between the bottom plate 110 and the connecting portion 121 is thus lowered.

With this configuration, the connecting portion 121 can extend outward and beyond the beam body 122, meaning that the connecting portion 121 has a larger contact area with the outer wall surface 111 of the bottom plate 110. The connecting portion 121 has a better effect of dispersing the force acting on the bottom plate 110. As a result, the risk of fracture between the mounting beam 120 and the bottom plate 110 is lower, and the box 10 is more stable when mounted on the main body.

According to some embodiments of this application, referring to FIG. 2, FIG. 4, and FIG. 5, the beam body 122 is spaced apart from the outer wall surface 111.

It can be understood that when the connecting portion 121 is in contact with and connected to the outer wall surface 111, the beam body 122 is spaced apart from the outer wall surface 111. To be specific, a side surface of the connecting portion 121 configured to be in contact with the outer wall surface 111 and a side surface of the beam body 122 facing the outer wall surface 111 form a height difference along a thickness direction N of the bottom plate 110. Optionally, the connecting portion 121 may be fixedly connected to a side surface of the beam body 122 facing the outer wall surface 111, such that the height difference is formed based on a thickness of the connecting portion 121.

With this configuration, when the connecting portion 121 of the mounting beam 120 is connected to the bottom plate 110 and in contact with the outer wall surface 111 of the bottom plate 110, the beam body 122 of the mounting beam 120 is spaced apart from the outer wall surface 111 of the bottom plate 110. Therefore, the beam body 122 can provide an avoidance effect for the outer wall surface 111 of the bottom plate 110, and the risk of interference between the beam body 122 and the structures on the outer wall surface 111 of the bottom plate 110 can be reduced.

According to some embodiments of this application, referring to FIG. 2, FIG. 4, and FIG. 5, the beam body 122 is provided with a mounting structure 1221, the beam body 122 is configured to be connected to the main body through the mounting structure 1221, and along the thickness direction N of the bottom plate 110, a projection of the mounting structure 1221 is located within a projection of the connecting portion 121.

It can be understood that the mounting structure 1221 may be a mounting hole (threaded hole, through hole, or the like), and a fastener such as bolt or screw may be used to connect the beam body 122 to the main body through the mounting hole. Alternatively, the mounting structure 1221 may be a weldable region for welding, and the weldable region can be welded to the main body to form an integral structure through a welding process.

With this configuration, when the beam body 122 of the mounting beam 120 is connected to the main body through the mounting structure 1221, the main body vibrates, causing the box 10 to vibrate relative to the main body. As a result, the overall weight of the box 10 exerts a significant force on the mounting structure 1221 and the main body. Moreover, a certain degree of vibration also occurs between the connecting portion 121 of the mounting beam 120 and the bottom plate 110, generating a significant force. By configuring the projection of the mounting structure 1221 along the thickness direction N of the bottom plate 110 to be located within the connecting portion 121, the force between the main body and the mounting structure 1221 and the force between the connecting portion 121 and the bottom plate 110 are substantially coincident in position in the thickness direction N of the bottom plate 110. In this way, it can effectively prevent the force between the main body and the mounting structure 1221 and the force between the connecting portion 121 and the bottom plate 110 forming a lever effect on the mounting beam 120, reducing stress on the mounting beam 120 as well as the main body and bottom plate 110 connected to the mounting beam 120, lowering the risk of fracture between the mounting beam 120 and the bottom plate 110, and making the box 10 more stable when mounted on the main body.

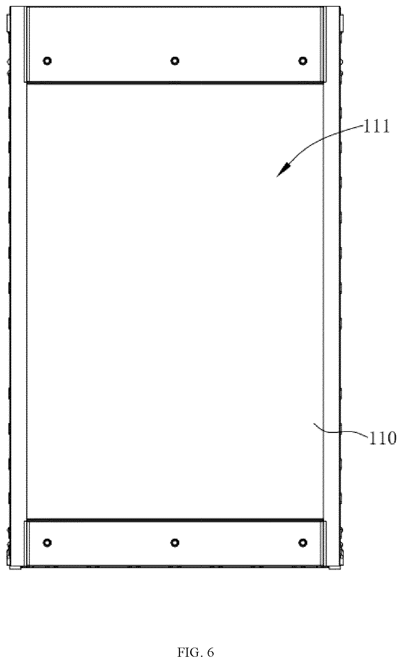

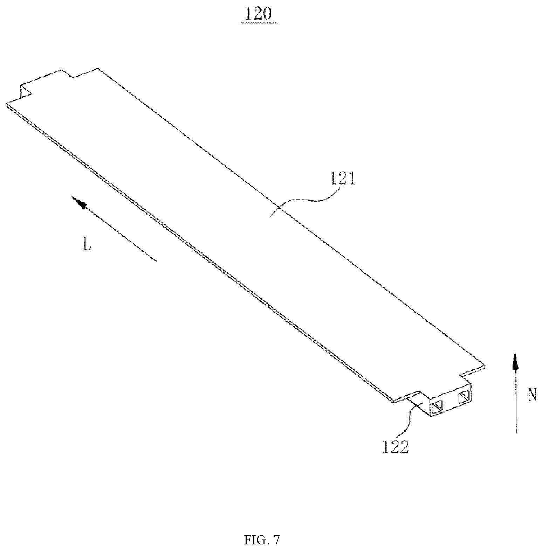

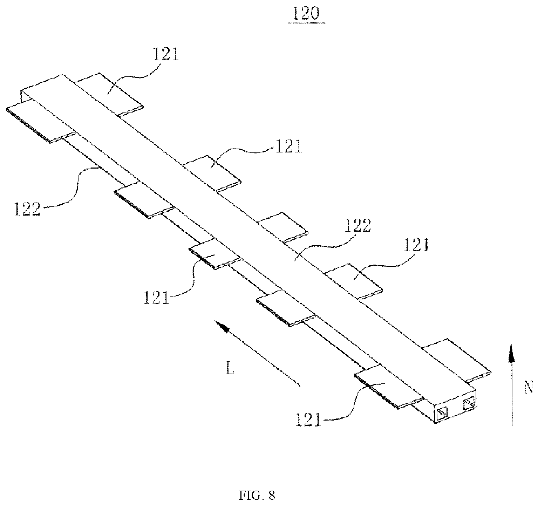

According to some embodiments of this application, referring to FIG. 6 to FIG. 8, FIG. 6 is a schematic structural diagram of another bottom plate 110 according to some embodiments of this application, where the bottom plate 110 in FIG. 6 can be adapted to the mounting beam 120 in FIG. 7, the mounting beam 120 in FIG. 8, or other mounting beams 120 meeting requirements. Therefore, the specific structure of the mounting beam 120 is not shown in the bottom plate 110 in FIG. 6.

In this embodiment, the beam body 122 abuts against the outer wall surface 111.

It can be understood that when the connecting portion 121 is in contact with and connected to the outer wall surface 111, the beam body 122 abuts against the outer wall surface 111, meaning that a side surface of the connecting portion 121 configured to be in contact with the outer wall surface 111 is flush with a side surface of the beam body 122 facing the outer wall surface 111 along the thickness direction N of the bottom plate 110. Optionally, a groove may be formed on the beam body 122, and the connecting portion 121 may be fixedly disposed in the groove, such that a surface of the beam body 122 and a surface of the connecting portion 121 are flush. Alternatively, the connecting portion 121 may be fixedly disposed on a surface of the beam body 122 intersecting the outer wall surface 111, with a side surface of the connecting portion 121 configured to be in contact with the outer wall surface 111 being flush with a side surface of the beam body 122 facing the outer wall surface 111.

With this configuration, based on the fact that the connecting portion 121 of the mounting beam 120 can be connected to and at least partially in contact with the outer wall surface 111 of the bottom plate 110, the beam body 122 can also abut against the outer wall surface 111. In this way, a contact area between the mounting beam 120 and the bottom plate 110 can be effectively increased, meaning that the mounting beam 120 can disperse the force with the bottom plate 110 through both the beam body 122 and the connecting portion 121, further reducing the risk of fracture between the mounting beam 120 and the bottom plate 110.

According to some embodiments of this application, referring to FIG. 2 to FIG. 5, an entirety of the connecting portion 121 is configured to be symmetrically arranged with respect to a central axis of the beam body 122.

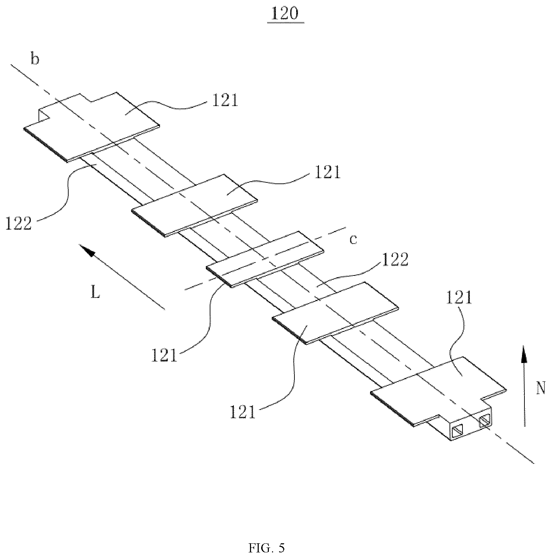

Optionally, the connecting portion 121 may be symmetrically arranged with respect to a central axis b of the beam body 122 along a length direction L thereof. Alternatively, the connecting portion 121 may be symmetrically arranged with respect to a central axis c of the beam body 122 perpendicular to the length direction L. As shown in FIG. 5, the connecting portion in FIG. 5 is symmetrically arranged with respect to both the central axis b of the beam body 122 along the length direction L and the central axis c of the beam body 122 perpendicular to the length direction L.

With this configuration, utilizing a symmetrical distribution structure of the connecting portion 121 with respect to the beam body 122, the force transmitted from the main body to the beam body 122 is more evenly distributed to the connecting portion 121 and the bottom plate 110. As a result, the connecting portion 121 has a better effect of dispersing the force acting on the bottom plate 110, and the risk of fracture between the mounting beam 120 and the bottom plate 110 is lower.

According to some embodiments of this application, referring to FIG. 2 to FIG. 5, the bottom plate 110 is provided with the beam body 122 along a central axis a thereof.

The central axis a of the bottom plate 110 refers to an auxiliary line that can divide the bottom plate 110 into two symmetrical parts. The beam body 122 is arranged along the central axis a of the bottom plate 110.

It can be understood that when the main body of the electric device vibrates, since the beam body 122 of the mounting beam 120 is fixedly connected to the main body, a certain degree of vibration also occurs between the connecting portion 121 of the mounting beam 120 and the bottom plate 110, such that stress is generated between the connecting portion 121 and the bottom plate 110.

With this configuration, when the main body vibrates, the box 10 also vibrates relative to the main body. Since the mounting beam 120 is connected to the main body, it can be equivalent to other parts of the box 10 vibrating relative to the mounting beam 120. The beam body 122 of the mounting beam 120 is arranged along the central axis a of the bottom plate 110, meaning that the mounting beam 120 positions at a vibration amplitude center of the bottom plate 110, allowing the connecting portion 121 of the mounting beam 120 to experience more uniform force from the bottom plate 110, thereby reducing the risk of fracture of the mounting beam 120 to some extent.

Optionally, a mount beam may also be provided at each of two ends of the outer wall surface 111 of the bottom plate 110 with respect to the central axis a, and the box 10 can be fixedly connected to the main body through the mount beam, to cooperate with the mounting beam 120 for simultaneous mounting use.

According to some embodiments of this application, referring to FIG. 2 to FIG. 5, the connecting portion 121 is provided in plurality, and the plurality of connecting portions 121 are spaced apart from each other.

The plurality of connecting portions 121 may be spaced apart in any direction. For example, the plurality of connecting portions 121 may be arranged at intervals along the length direction L of the beam body 122. Alternatively, the plurality of connecting portions 121 may be arranged at intervals in a direction perpendicular to the length direction L of the beam body 122, for example, distributed on opposite sides of the beam body 122.

With this configuration, a plurality of spaced-apart connecting portions 121 can be used to connect to and in contact with the bottom plate 110, and the force acting on the bottom plate 110 can be dispersed through the plurality of connecting portions 121, which can effectively reduce the risk of fracture between the connecting portions 121 and the bottom plate 110.

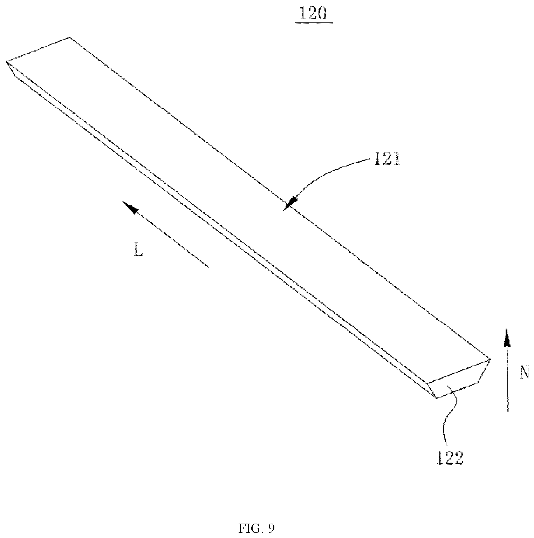

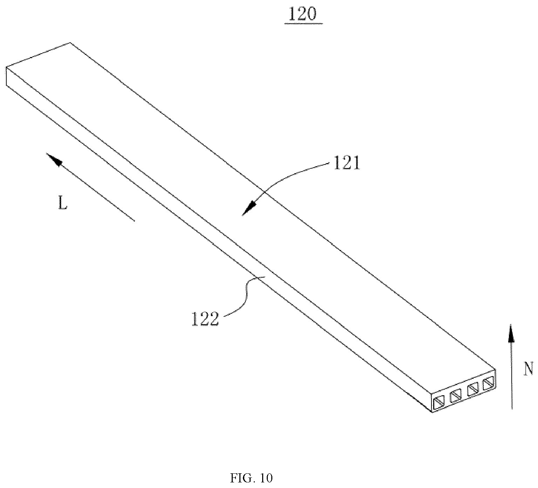

According to some embodiments of this application, referring to FIG. 6, FIG. 9, and FIG. 10, the mounting beam 120 further includes a beam body 122, where a portion of the beam body 122 facing the outer wall surface 111 forms the connecting portion 121, a portion of the beam body 122 facing away from the outer wall surface 111 forms a mounting portion, the mounting portion is configured to connect to the main body, and along the thickness direction N of the bottom plate 110, a projection of the mounting portion is located within a projection of the connecting portion 121.

The portion of the beam body 122 facing the outer wall surface 111 forms the connecting portion 121, meaning that the connecting portion 121 is a part of the beam body 122. By improving the beam body 122 itself, the projection of the mounting portion is located within the projection of the connecting portion 121 along the thickness direction N of the bottom plate 110, meaning that a surface area on the side of the connecting portion 121 is increased, such that the connecting portion 121 has a larger contact area with the outer wall surface 111 of the bottom plate 110. As a result, the connecting portion 121 has a better effect of dispersing the force acting on the bottom plate 110, and the risk of fracture between the mounting beam 120 and the bottom plate 110 is lower.

Optionally, the implementation of the projection of the mounting portion being located within the projection of the connecting portion 121 along the thickness direction N of the bottom plate 110 may include: the beam body 122 is configured as a trapezoidal beam, meaning that a cross-section of the beam body 122 is trapezoidal, and a larger one of two parallel side walls of the trapezoidal beam is used as the connecting portion 121; or the beam body 122 is configured as a convex beam, meaning that a cross-section of the beam body 122 is substantially convex-shaped, and a larger one of outer side walls of the convex beam is used as the connecting portion 121; or the beam body 122 is designed to be widened overall to increase a surface area of an outer side wall of the beam body 122 used as the connecting portion 121.

With this configuration, the projection of the mounting portion is arranged to be located within the projection of the connecting portion 121 along the direction of the bottom plate 110, meaning that an area of the connecting portion 121 is controlled to be larger than an area of the mounting portion. The connecting portion 121 with a larger area is used to connect to and in contact with the bottom plate 110, which can disperse the force exerted by the bottom plate 110 on the connecting portion 121, thereby effectively reducing the risk of fracture between the connecting portion 121 and the bottom plate 110.

According to some embodiments of this application, referring to FIG. 2 to FIG. 5, the bottom plate 110 is provided with a flow channel 1101, where the flow channel 1101 accommodates a heat exchange medium, and along the thickness direction N of the bottom plate 110, a projection of the flow channel 1101 is separated from a projection of the connecting portion 121.

The flow channel 1101 is configured to allow a heat exchange medium to flow, enabling heat exchange between the heat exchange medium and structures within the box 10 (such as the battery cell 20) to achieve cooling. Optionally, the heat exchange medium may be a liquid medium, such as cooling water or cooling oil.

Optionally, the flow channel 1101 may be formed using a blow molding process, meaning that the bottom plate 110 may be a blow-molded cold plate formed by the blow molding process. Due to the process characteristics of blow-molded cold plates, blow-molded cold plates have a lower mass, so using a blow-molded cold plate as the bottom plate 110 can reduce an overall weight of the box 10.

It can be understood that the bottom plate 110 may also be a brazed cold plate formed by a stamping process, as shown in FIG. 6. The bottom plate 110 shown in FIG. 6 does not include the flow channel 1101, allowing the bottom plate 110 to accommodate a mounting beam 120 with a connecting portion 121 having a larger surface area. Optionally, the bottom plate 110 in FIG. 6 may be used with, but is not limited to, the mounting beam 120 in FIG. 5, FIG. 7, FIG. 9, and FIG. 10, or other mounting beams 120 of other structures.

With this configuration, the flow channel 1101 and the connecting portion 121 are separated along the thickness direction of the bottom plate 110, which reduces damage to the flow channel 1101 due to the force between the connecting portion 121 and the bottom plate 110.

For example, in some specific implementations, the box 10 includes a bottom plate 110 and a mounting beam 120, where the bottom plate 110 is preferably a blow-molded cold plate, and a flow channel 1101 is formed on the bottom plate 110 by a blow molding process. The mounting beam 120 includes a beam body 122 and a connecting portion 121, where the connecting portion 121 is a fin, and a plurality of fins are integrally formed on a side of the beam body 122 facing the bottom plate 110, with the plurality of fins spaced apart along a length direction L of the beam body 122. The fins may be rectangular fins, and extend beyond a range of the beam body 122 in a direction parallel to the outer wall surface 111 and perpendicular to the length direction L of the beam body 122. During assembly, the beam body 122 is arranged along a central axis a of the bottom plate 110, and all fins are separately in contact with and spot-welded to the outer wall surface 111 of the bottom plate 110 to form an integral structure, where a contact connection between the fin and the outer wall surface 111 avoids the flow channel 1101 formed on the bottom plate 110, for example, the fins may be in contact with gaps between the flow channels 1101 or an outer peripheral area of the flow channel 1101. In this case, a gap is formed between the beam body 122 and the outer wall surface 111, such that the beam body 122 can avoid the flow channel 1101. The connection between the fins and the bottom plate 110 can disperse stress between the bottom plate 110 and the mounting beam 120, which can effectively reduce the risk of fracture between the bottom plate 110 and the mounting beam 120.

According to some embodiments of this application, referring to FIG. 2, according to a second aspect, an embodiment of this application further provides a battery 100, including a battery cell 20 and the box 10 as described above, where the battery cell 20 is located within the box 10. The battery 100 provided in this embodiment of this application includes the box 10 as described above. With a lower risk of fracture between the mounting beam 120 and the bottom plate 110 of the box 10, an overall structure of the battery 100 is more robust.

According to some embodiments of this application, referring to FIG. 1, according to a third aspect, an embodiment of this application further provides an electric device, including a main body and the battery 100 as described above, where the box 10 of the battery 100 is disposed on the main body, and the battery 100 is configured to provide electrical energy. The electric device may be any of the electric devices introduced in the foregoing embodiments, such as the vehicle 1000, and details are not repeated herein.

The electric device provided in this embodiment of this application includes the battery 100 as described above. With a more robust overall structure of the battery 100, a process of the battery 100 being disposed on the main body and providing electrical energy to the main body is more stable, and a risk of the battery 100 detaching from the main body is lower.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A box configured to be disposed on a main body of an electric device, **characterized by** comprising:
a bottom plate having an outer wall surface; and
a mounting beam, wherein the mounting beam is configured to connect to the main body, the mounting beam comprises a connecting portion, the connecting portion is configured to be connected to the bottom plate, and at least a portion of the connecting portion is in contact with the outer wall surface.

2. The box according to claim 1, **characterized in that** the mounting beam further comprises a beam body, wherein the beam body is configured to connect to the main body, and the connecting portion is disposed on the beam body.

3. The box according to claim 2, **characterized in that** the connecting portion extends outward from the beam body and beyond the beam body.

4. The box according to claim 2 or 3, **characterized in that** the beam body is spaced apart from the outer wall surface.

5. The box according to any one of claims 2 to 4, **characterized in that** the beam body is provided with a mounting structure, the beam body is configured to be connected to the main body through the mounting structure, and along a thickness direction of the bottom plate, a projection of the mounting structure is located within a projection of the connecting portion.

6. The box according to claim 2 or 3, **characterized in that** the beam body abuts against the outer wall surface.

7. The box according to any one of claims 2 to 6, **characterized in that** an entirety of the connecting portion is configured to be symmetrically arranged with respect to a central axis of the beam body.

8. The box according to any one of claims 2 to 7, **characterized in that** the bottom plate is provided with the beam body along a central axis thereof.

9. The box according to any one of claims 1 to 8, **characterized in that** the connecting portion is provided in plurality, and the plurality of connecting portions are spaced apart from each other.

10. The box according to claim 1, **characterized in that** the mounting beam further comprises a beam body, wherein a portion of the beam body facing the outer wall surface forms the connecting portion, a portion of the beam body facing away from the outer wall surface forms a mounting portion, the mounting portion is configured to connect to the main body, and along a thickness direction of the bottom plate, a projection of the mounting portion is located within a projection of the connecting portion.

11. The box according to any one of claims 1 to 10, **characterized in that** the bottom plate is provided with a flow channel, wherein the flow channel accommodates a heat exchange medium, and along a thickness direction of the bottom plate, a projection of the flow channel is separated from a projection of the connecting portion.

12. A battery, **characterized by** comprising a battery cell and the box according to any one of claims 1 to 11, wherein the battery cell is located within the box.

13. An electric device, **characterized in** comprising a main body and the battery according to claim 12, wherein the box of the battery is disposed on the main body, and the battery is configured to provide electrical energy.
